# EUROPEAN PATENT SPECIFICATION

(11) **EP 3 011 825 B1**
(45) Date of publication and mention of the grant of the patent: **04.10.2017**
(21) Application number: 15191069.2
(22) Date of filing: 22.10.2015
(51) Int. Cl.: A01G 1/02, A01G 13/00, A01G 13/02

(54) **DEVICE AND METHOD FOR PLACING A HOLDER ELEMENT IN THE GROUND**
VORRICHTUNG UND VERFAHREN ZUM PLATZIEREN EINES HALTEELEMENTS IM BODEN
DISPOSITIF ET PROCÉDÉ DE MISE D`UN ÉLÉMENT DE SUPPORT DANS LE SOL

(30) Priority: 23.10.2014 NL 2013671
(43) Date of publication of application: 27.04.2016
(73) Proprietor: Engels Familie Holding B.V., 5981 NC Panningen (NL)
(72) Inventor: ENGELS, Franciscus Maria, 5981 NC Panningen (NL); ENGELS, Marcus Franciscus, 5981 NC Panningen (NL); ENGELS, Christiaan Michiel, 5981 NC Panningen (NL)
(74) Representative: Algemeen Octrooi- en Merkenbureau B.V.

(56) References cited:
- EP-A1- 2 710 882
- DE-B3-102010 047 591
- NL-C- 2 007 799
- US-A- 4 627 563

## Description

The invention relates to a device and method for placing a holder element for a mini tunnel system in the ground on or near an asparagus bed.

Such a mini tunnel system is known from DE 10 2010 047 591 B3. The known mini tunnel system comprises an asparagus bed and a multitude of holder elements arranged in spaced-apart relationship in the longitudinal direction of the asparagus bed. A foil element is arranged over the holder elements. The holder element is substantially U-shaped, comprising two legs interconnected by a bar-shaped support member. The legs extend into the ground near the asparagus bed with one end, so that the support member extends substantially parallel to the ground surface. The foil element is supported on the support member, so that the foil element is held spaced from the asparagus bed. In this way a heat effect is obtained on the asparagus bed and an insulating layer is provided between the foil element and the asparagus bed, as it were. The effect of the insulating layer is an improved growth of the asparagus. The part of the support member that is in contact with the foil element extends in a substantially straight line, parallel to the ground surface.

DE 10 2011 001917 A1 in particular discloses C-shaped, U-shaped or V-shaped holder elements.

EP 2710882 A1 discloses a device for lifting a foil element and a further foil element placed on/near an asparagus bed from said asparagus bed and for carrying back the foil element and the further foil element to the asparagus bed.

In order to obtain an optimum effect, the placement of the known holder elements at the asparagus bed must take place with a great deal of precision. If the elements are placed too far away from the bed, a poor seal between the asparagus bed and the foil element will result and the tunnel will become sensitive to wind. The inventor has found that also the angle at which the holder elements are placed is important with a view to obtaining an optimum effect. The installation of the holder elements is done manually, which takes a great deal of time and does not contribute toward realising the precision aimed at.

It is an object of the present invention to overcome the drawbacks of the prior art.

In order to achieve that object, the invention provides a device according to claim 1.

The present invention provides a device which is in particular suitable for use with U-shaped holder elements comprising a foil supporting part for supporting a foil element of the mini tunnel system as well as two fixing parts extending on either side of the foil supporting part, via which the holder element can be placed in the ground.

The device according to the present invention comprises a frame provided with:
- a holder opening in which the holder element can be placed, as well as
- placement means configured for placing the holder element in the ground on or near the asparagus bed.

Using the device according to the present invention, a holder element can be placed in the ground on or near the asparagus bed in a quick and reliable manner.

The object of the present invention is thus achieved.

In one embodiment, the device is in particular suitable for use with holder elements whose fixing parts extend at an angle different from zero relative to each other, substantially in opposite directions, seen from the foil supporting part.

In this embodiment the device is provided with biasing means which are configured to at least hold the holder element in a biased position once it is placed in the holder opening, in which biased position the fixing parts have been moved toward each other, preferably extending substantially parallel to each other. Because of the bias, a holder element is retained in the holder opening in a simple manner.

The device is in particular configured so that the biasing means are designed to realise or maintain the bias on the above-described holder element such that the foil supporting part has a substantially curved, in particular circular arc configuration. Such a curvature of the foil supporting part leads to less stress on the foil element, which is advantageous. The advantages of a mini tunnel system comprising such curved holder elements are described in NL 2011629 and EP 14188301, both in the name of the present applicant. According to the invention, the placement means comprise a pushing element which is configured to be in contact with at least part of the foil supporting part of the holder element when the holder element is present in the holder opening. The pushing means are configured so that the pushing element pushes against at least part of the foil supporting part of the holder element so as to insert the holder element into the ground. The holder opening may be provided with guide elements which guide parts of the holder element, such as the fixing parts, for example, such that the holder element is placed in the ground at a desired position and/or in a desired orientation.

In a very simple, efficient and compact embodiment, the placement means are provided with a lever mechanism for placing the holder element in the ground. The lever mechanism may be manually operable or be operated by means of a driving mechanism.

The lever mechanism may comprise a lever that is pivotally connected to the frame, which lever is connected to the pushing element, for example, for placing the holder element from its position in the holder opening into the ground in the biased condition thereof.

In one embodiment, the device is provided with guide means configured to position the device at a desired distance and/or in a desired orientation relative to the asparagus bed, so that the holder element can be placed in the ground on or near the asparagus bed at a desired distance therefrom and/or in a desired orientation relative thereto. The guide means may in that case be configured to follow the asparagus bed, so that the device will be positioned at the desired distance and/or in the desired orientation at all times.

It is preferable if the device comprises moving means for moving the device along the asparagus bed. In a simple embodiment, the moving means comprise one or more wheel elements connected to the frame of the device. In a very efficient embodiment, without intending to be limited thereto, the moving means may be formed by a device for lifting a foil element and a further foil element from an asparagus bed, as described in EP 2 710 882 A1 in the name of the present applicant, which publication shall be considered to be fully incorporated herein by reference.

In one embodiment, the placement means of the device are configured to place the holder element in the ground in such a manner that the foil supporting part extends substantially in a longitudinal direction of the asparagus bed. A mini tunnel system comprising holder elements placed in this manner is described in the aforesaid EP 2 710 882 A1 in the name of the present applicant. The device could in that case be disposed on one or more sides of the device described in EP 2 710 882 A1. It is noted, however, that in principle the invention can also be used with holder elements that extend in transverse direction over the asparagus bed.

According to one aspect of the invention, there is provided a method for placing a holder element using a device according to the present invention, wherein the method comprises providing a substantially U-shaped holder element comprising:
- a foil supporting part for supporting a foil element of the mini tunnel system, as well as
- two fixing parts extending on either side of the foil supporting part, via which the holder element can be placed in the ground,
wherein the method comprises the further steps of
- placing the holder element in the holder opening;
- placing the holder element in the ground using the placement means.

Advantages of the methods have already been mentioned in the discussion of the device.

In one embodiment, the method comprises the step of providing a holder element whose fixing parts extend at an angle different from zero relative to the foil supporting part and relative to each other.

In one embodiment, the method comprises the step of biasing the aforesaid holder element, in which biased condition the fixing parts have been moved toward each other, extending substantially parallel to each other.

The method may in that case comprise the step of placing the holder element in the holder opening in the biased condition thereof. The holder element is in that case configured to hold the holder element essentially in said biased condition, and the placement means are configured to place the holder element in the ground in the biased condition thereof.

In one embodiment, the method in particular comprises the step of tensioning the holder element such that the foil supporting part is substantially curved, in particular in the form of a circular arc.

The invention will now be explained in more detail by means of a description of a preferred embodiment of a device according to the invention, in which reference is made to the following figures, in which:
Figures 1 a and 1b are schematic views of holder elements for use in the device and method according to the present invention;
Figures 2a and 2b are a perspective view and a front view, respectively, of a device according to the present invention;
Figure 3 is a view of the device shown in figures 2a and 2b in an operative condition thereof;
Figures 4-6 are a perspective view, a side view and a front view, respectively, of the device according to the present invention placed on a system for lifting and laying down foil elements of a mini tunnel system for an asparagus bed.

Like parts are indicated by the same numerals in the figures and the description thereof.

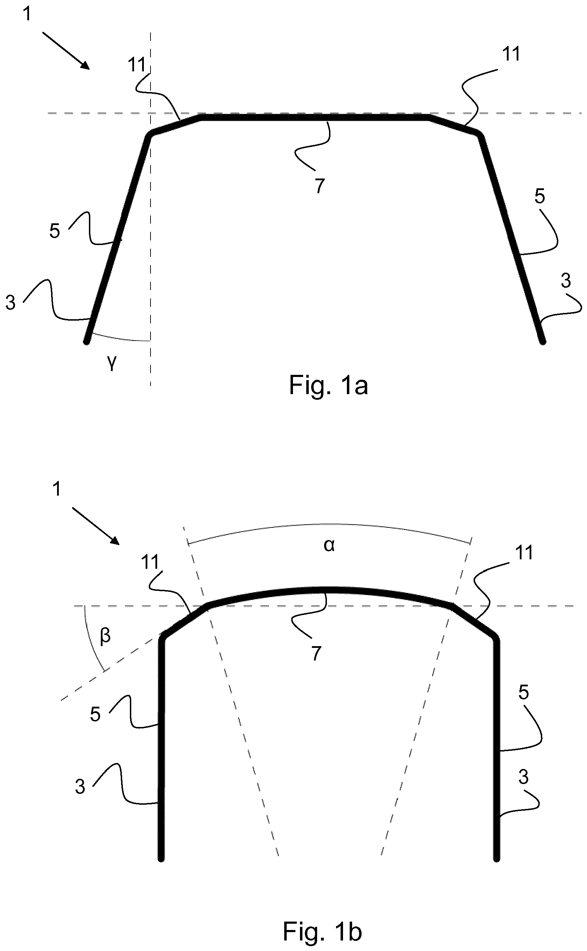

Figure 1a shows a detail view of a holder element 1 for use in an embodiment of the invention, which holder element 1 is designed to form a mini tunnel system therewith. The holder element 1 is U-shaped and comprises two fixing parts 3 forming the legs 5 of the U, which legs are interconnected by a foil supporting part 7, which forms the base of the U. The connection between the fixing parts 3 and the foil supporting part 7 is effected by means of respective connecting parts 11, which extend at an angle relative to the associated fixing part 3 and the foil supporting part 7. As the figure shows, the legs 5 of the holder element 1 do not extend parallel to each other. The base of the U-shaped holder element 1 is formed by a supporting part 7 that extends substantially in a straight line. The legs extend at an angle γ relative to a line perpendicular to the foil supporting part 7. The angle γ is about 20°, but it is possible to use a larger or smaller angle. Preferably, the angle ranges between 10° and 45°. Connecting parts 11, which extend at an angle relative to the legs 5 and the foil supporting part 7, connect the legs 5 to the foil supporting part 7.

In the embodiment shown in figure 1a, biasing the holder element 1 can be done by moving the legs 5 toward each other until the situation shown in figure 1b, or at least a similar situation, is obtained, and subsequently inserting the legs into the ground with their fixing parts 3. Upon movement of the legs 5 toward each other, elastic energy is stored in the foil supporting part 7, resulting in the foil supporting part 7 taking on a curved shape, in particular the circular arc shape shown in figure 1 b. The embodiment of the holder element 1 shown in figure 1 a can be produced in a very simple manner, merely require the bending of a straight bar in four places.

With reference to figure 1b, the figure shows that the angle β between the connecting part 11 and the ground (horizontal) in an installed condition of the holder element approximately equals 25 degrees. Preferably, the angle between the connecting part 11 and the ground surface is larger than the angle of the end part of the foil supporting part 7 that is connected to the connecting part 11. In a desired embodiment, which ensures that a harvesting machine that may be used will not catch up on the holder element, or at least less easily, the connecting part 11 is configured so that it makes an angle of less than 45°, for example 25° with the ground surface, although other angles are also conceivable. As further shown, the foil supporting part 7 extends in a continuous smooth configuration between the two connecting parts 11, with the foil supporting part 7 first going up from the left to the right, seen in the figure, and subsequently going down. The foil supporting part 7 thus makes an angle essentially other than 0° with the ground surface along its entire length. Only at the transition from going up to going down does the foil supporting part 7 extend horizontally. However, the total length along which the foil supporting part 7 extends horizontally is very small. An associated radius of curvature of the foil supporting part preferably ranges between 0.5 and 4 times the distance between the ground surface and the foil supporting part, or between 0.5 and 4 times the length of the leg 5 of the U-shaped holder element 1. In particular, the radius of curvature may amount to 1 - 2 times the respective value.

The associated circular arc α preferably ranges between 20° and 90°. In the illustrated embodiment, the circular arc α is about 34°.

In the illustrated embodiment, the foil supporting part 7 is in its entirety positioned above the connecting parts 11. In figure 1 the holder element 1 is symmetrical, in particular mirror-symmetrical in relation to an axis that extends parallel to the legs 5 of the holder element 1 and which is disposed centrally between the legs 5. Asymmetrical embodiments are also conceivable, however.

Installing a holder element 1 in a biased condition thereof, as explained in the foregoing, has been found to be very difficult. In particular the positioning precision, the reproducibility and the installation speed are difficult elements. The device and method according to the present invention make it possible to carry out the installation of a holder element 1, in particular a biased holder element, in a very precise, reproducible and quick manner. The device and method will be explained with reference to the following figures.

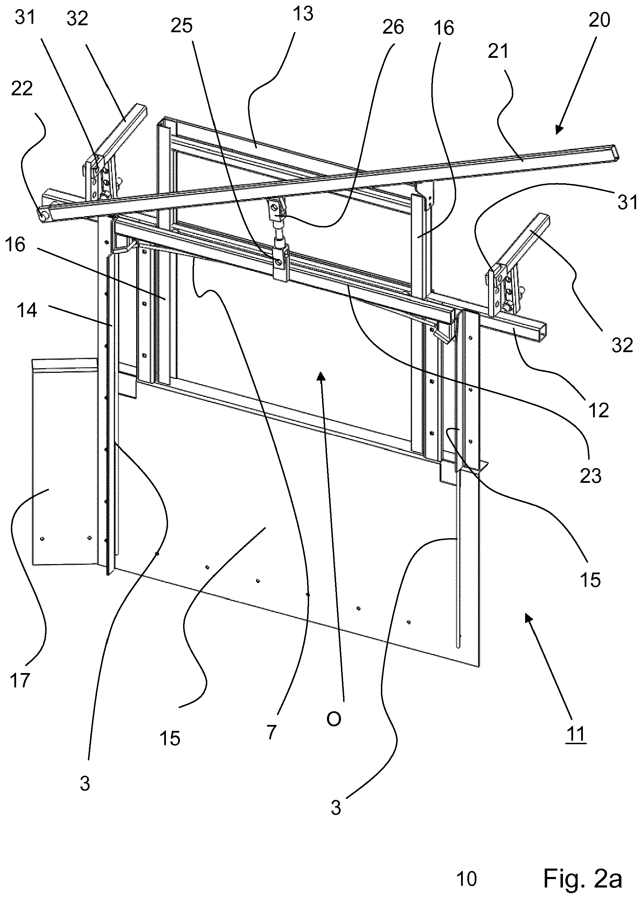

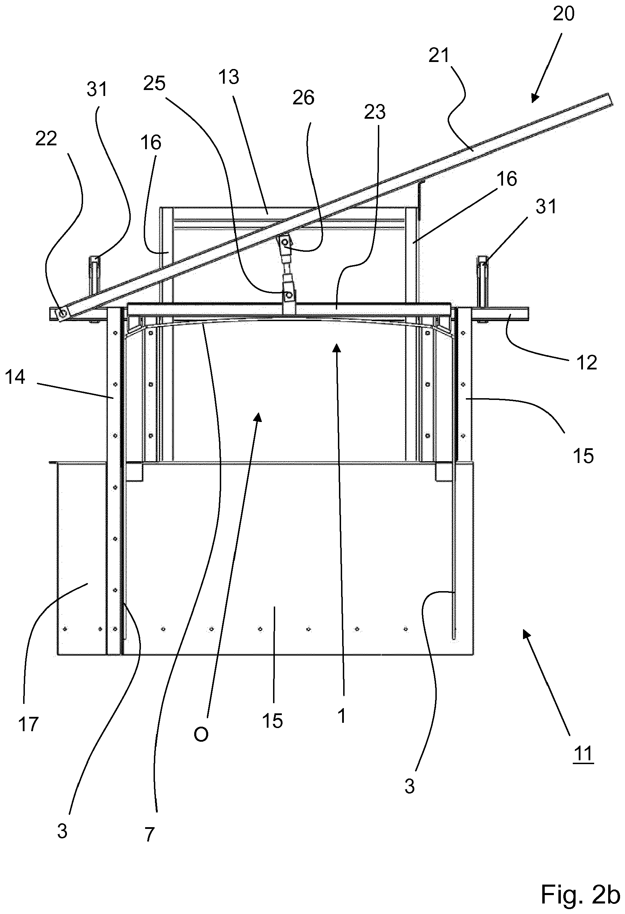

Figures 2a and 2b are a perspective view and a front view, respectively, of a device according to the present invention which is also suitable for use in the method according to the present invention.

With simultaneous reference to figures 2a and 2b, there is shown that the device 11 comprises a frame substantially made up of a number of sections 12, 13, 16. The device is configured so that it defines a holder opening O, in which holder opening O the holder element 1 can be placed, as is also shown in figures 2a and 2b. The device further comprises placement means 20 which are designed to move the holder element 1 from the holder opening O in a direction such that the holder element can be placed in the ground on or near the asparagus bed.

The holder element 1 placed in the device 11 is in this case a holder element as described with reference to figure 1 a. The holder element 1 is placed in the holder opening O in a biased condition. The biased condition of the holder element 1 is maintained in that the holder element 1 bears on biasing means, which are made up of sections 14, 15 in the illustrated embodiment. The sections extend substantially parallel to each other, so that also the fixing parts 3 extend substantially parallel to each other in this biased condition. As shown, the foil supporting part 7 is substantially curved in that situation, in particular in the form of a circular arc.

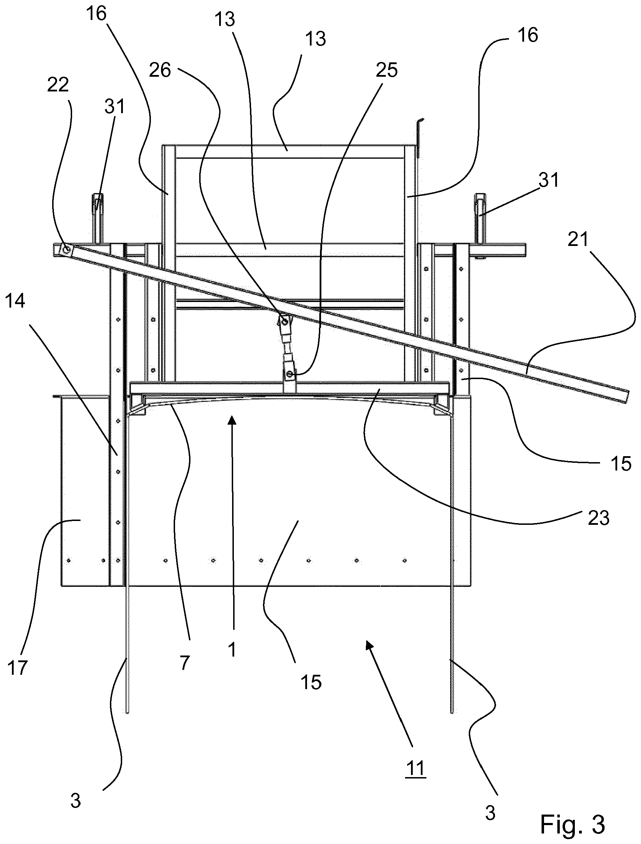

The placement means 20 of the device comprise a pushing element 23. In the illustrated embodiment, the pushing element 23 is a section which can be brought into contact with a part of the foil supporting part 7 of the holder element 1. To move the holder element 1 in a desired direction, the placement means 20 are provided with a lever mechanism 20, which comprises a lever 21 which is pivot-mounted to the frame 12, 13, 16 by means of a pivot 22. The lever is operatively connected to the pushing element 23 via connecting elements 25, 26, so that force is transmitted to the pushing element 23 by moving the lever, so that subsequently the holder element 1 can be moved. The holder element 1 can thus be placed in the ground by operating the lever 21. When the lever moves down, the situation shown in figure 3 is obtained, in which, as shown, the holder element 1 has been moved down and the fixing elements 3 have been moved further down. In this way the holder element can be installed in the ground, therefore.

As an alternative to a lever, it is conceivable to operate the pusher element 23 in a different manner, for example by means of hydraulic and/or pneumatic cylinders, spindle drives, gear and/or pinion drives, crankshaft drives and/or other drives.

In the illustrated embodiment, the transmission 25, 26 between the lever and the pushing element 23 is configured as a section with two pivotable connections 25, 26. Also in this case a different configuration of the transmission may be used.

As will be explained hereinafter yet, the device 11 comprises guide means 15, 17 in the form of two plates 15, 17. The guide means are designed to move along the asparagus bed, so that the device - and thus the holder element - can be placed at a desired distance from the asparagus bed. The device is for that purpose also provided with pivot means 31 in the form of a pivot 31 connected to the section 12 of the frame, on which fixing means 32 are provided.

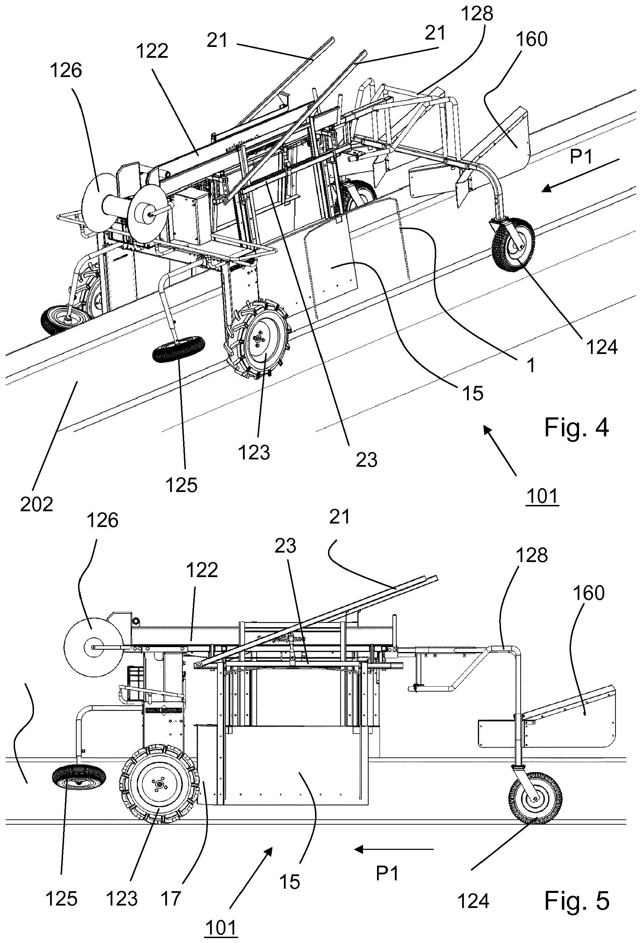

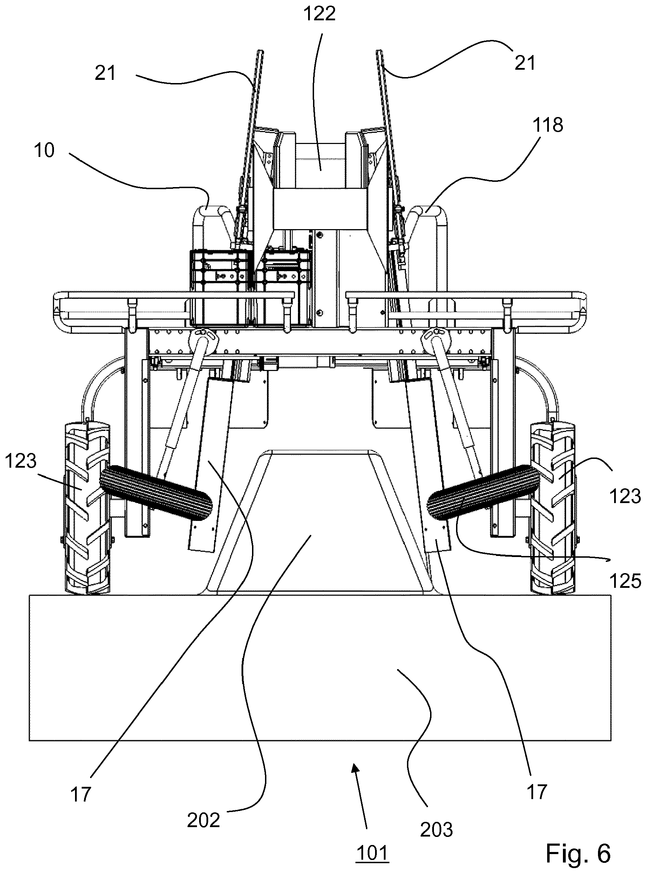

The device according to the present invention can be used in a simple manner, for example by attaching it to a system 101 for lifting and laying down foil elements of the many tunnel system, as shown in figure 4, 5 and 6. Such a system 101 is described in great detail in NL 2009501 and EP 2 710 882, which publications are fully incorporated herein by reference.

With simultaneous reference to figures 4-6, there is shown that the system 101 comprises a frame with front wheels 123 and rear wheels 124 on an underside thereof, which wheels are provided in such a manner that the system 101 is movable in the longitudinal direction of an asparagus bed 202 present on the bottom 203. In an operative condition of the system 101, the system is moved in the direction indicated by arrow p1 either manually or using driving means. The system 101 is further provided with guide wheels 125 disposed near the front wheels 123 for following the asparagus bed, which guide wheels extend substantially in a horizontal direction.

The system 101 is designed for lifting and laying down foil elements which are not shown here, but which are known to the skilled person. For that purpose the system comprises support means 122 in the form of a gutter element 122, which are vertically spaced from the upper side of the asparagus bed 202, so that a working space is provided at the asparagus bed. The system further comprises a rotatable receiving drum 126, via which the foil elements are squeezed together and lifted onto the relatively narrow gutter element 122. At the rear side of the system 101, foil laying means 128 are provided, which means are configured for forming the first foil element (black-white agrifoil) as well as the second foil element (transparent foil) into a shape adapted to that of the asparagus bed and arranging said elements over the holder elements 1.

The rear side of the system 101 further comprises centring means 160, which are configured for centring the holder elements 1 placed laterally of the asparagus bed. Each centring means 160 comprises a funnel-shaped opening defined by two side-by-side centring plates being arranged at an angle relative to each other. The centring plates are located on a side directed toward the front side of the device. On a rear side of this part of the device, a centring gutter is provided. The latter keeps the holder element 1 in place the moment the foil is moved down. Thus it is ensured that the foil is correctly arranged over the holder element 1.

The device 11 according to the present invention is provided on the above-described system 101. In one embodiment, the device 11 is provided on one side of the system 101, near the gutter element 122 in the illustrated embodiment, between the front wheels 123 and the rear wheels 124. The guide plate 15, 17 is located at the level of the asparagus bed 202. Because the device 11 is pivotally connected to the frame of the system 101 via the pivot means 31, 32, the device is capable of pivoting through a small angle when there is contact between the guide plate 15, 17 and the asparagus bed 202. As a result, the device 11 will be moved into the correct position and the correct angle, so that the holder element 1 will be installed at the correct position and at the correct angle when the device 11 is put into operation.

The skilled person will appreciate that in the foregoing the invention has been described with reference to a few possible embodiments, which are preferred. The invention is not limited to these embodiments, however.

Thus, the invention has in particular been explained with reference to the practice of biasing the holder element. The invention can also be used without biasing the holder element, however.

Many modifications are conceivable within the scope of the invention. The protection being sought is defined in the appended claims.

## Claims

1. A device (11) for placing a holder element (1) for a mini tunnel system in the ground on or near an asparagus bed (202), wherein the holder element (1) is substantially U-shaped, comprising:
- a foil supporting part (7) for supporting a foil element of the mini tunnel system, as well as
- two fixing parts (3) extending on either side of the foil supporting part, via which the holder element can be placed in the ground,
wherein the device (11) comprises a frame (12, 13, 16) comprising:
- placement means (20) provided with a holder opening (O) in which the holder element (1) can be placed, **characterised in that** the placement means (20) are configured for placing the holder element (1) in the ground on or near the asparagus bed (202), wherein the placement means (20) comprise a pushing element (23) which is movable relative to the frame, wherein the pushing element is configured to be in contact with at least part of the foil supporting part (7) of the holder element (1) when the holder element (1) is present in the holder opening (O).

2. A device according to claim 1, wherein the fixing parts (3) of the holder element (1) extend at an angle different from zero relative to each other, and wherein the device (11) is provided with biasing means (14, 15) which are configured to at least hold the holder element (1) in a biased position once it is present in the holder opening, in which biased position the fixing parts (3) have been moved toward each other, extending substantially parallel to each other.

3. A device according to claim 2, wherein the biasing means (14, 15) are designed to realise or maintain the bias on the holder element (1) such that the foil supporting part (7) has a substantially curved, in particular circular arc configuration.

4. A device according to any one of the preceding claims, wherein the placement means (20) are provided with a lever mechanism (20) for placing the holder element in the ground.

5. A device according to claims 4, wherein the lever mechanism (20) comprises a lever (21) which is pivot(22)-mounted to the frame and which is connected to the pushing element (23) for placing the holder element (1) in the ground from its position in the holder opening (O).

6. A device according to any one of the preceding claims, wherein the device (11) is provided with guide means (15, 17) configured to position the device at a desired distance from the asparagus bed.

7. A device according to any one of the preceding claims, wherein the device (11) comprises moving means (101) for moving the device along the asparagus bed.

8. A device according to any one of the preceding claims, wherein the placement means (20) are configured to place the holder element in the ground in such a manner that the foil supporting part (7) of the holder element (1) extends substantially in a longitudinal direction (P1) of the asparagus bed (202).

9. A method for placing a holder element (1) using a device (11) according to any one of claims 1 - 8, wherein the method comprises the step of providing a substantially U-shaped holder element (1) comprising
- a foil supporting part (7) for supporting a foil element of the mini tunnel system, as well as
- two fixing parts (3) extending on either side of the foil supporting part (7), via which the holder element (1) can be placed in the ground,
wherein the method comprises the further steps of
- placing the holder element (1) in the holder opening (O);
- placing the holder element in the ground using the placement means.

10. A method according to claim 9, comprising the further step of biasing the aforesaid holder element (1), in which biased condition the fixing parts (3) have been moved toward each other, extending substantially parallel to each other.

11. A method according to claim 10, wherein the method comprises the step of placing the holder element (1) in the holder opening (O) in the biased condition thereof.

12. A method according to claim 9, 10 or 11, comprising the step of tensioning the holder element such that the foil supporting part is substantially curved, in particular in the form of a circular arc.

## Patentansprüche

1. Vorrichtung (11) zum Platzieren eines Halterelements (1) für ein Minitunnelsystem an oder nahe an einem Spargeldamm (202) in dem Erdreich, wobei das Halterelement (1) im Wesentlichen U-förmig ist, umfassend:
- einen Folientrageteil (7) zum Tragen eines Folienelements des Minitunnelsystems, sowie
- zwei sich auf beiden Seiten des Folientrageteils erstreckende Befestigungsteile (3), über die das Halterelement in dem Erdreich platziert werden kann,
wobei die Vorrichtung (11) einen Rahmen (12, 13, 16) umfasst, der Rahmen (12, 13, 16) umfassend:
- Platzierungsmittel (20), die mit einer Halteröffnung (0) versehen sind, in der das Halterelement (1) platziert werden kann, **dadurch gekennzeichnet, dass** die Platzierungsmittel zum Platzieren des Halterelements (1) an oder nahe an dem Spargeldamm (202) in dem Erdreich angeordnet sind, wobei die Platzierungsmittel (20) ein Drückelement (23) umfassen, das relativ zu dem Rahmen bewegbar ist, wobei das Drückelement konfiguriert ist, um mit wenigstens einem Teil des Folientrageteils (7) des Halterelements (1) in Kontakt zu sein, wenn sich das Halterelement (1) in der Halteröffnung (0) befindet.

2. Vorrichtung nach Anspruch 1, wobei die Befestigungsteile (3) des Halterelements (1) sich in einem Winkel zueinander erstrecken, der von null verschieden ist, und wobei die Vorrichtung (11) mit Vorspannmitteln (14, 15) versehen ist, die konfiguriert sind, um wenigstens das Halterelement (1) in einer vorgespannten Position zu halten, sobald es sich in der Halteröffnung befindet, wobei die Befestigungsteile (3) in dieser vorgespannten Stellung aufeinander zu bewegt worden sind, wobei sie sich im Wesentlichen parallel zueinander erstrecken.

3. Vorrichtung nach Anspruch 2, wobei die Vorspannmittel (14, 15) für das Realisieren oder Erhalten der auf das Halterelement (1) wirkenden Vorspannung ausgelegt sind, so dass der Folientrageteil (7) eine im Wesentlichen gekrümmte, insbesondere Kreisbogenkonfiguration aufweist.

4. Vorrichtung nach einem der vorhergehenden Ansprüche, wobei die Platzierungsmittel (20) mit einem Hebelmechanismus (20) zum Platzieren des Halterelements in dem Erdreich versehen sind.

5. Vorrichtung nach Anspruch 4, wobei der Hebelmechanismus (20) einen Hebel (21) umfasst, der über einen Drehpunkt (22) am Rahmen montiert ist und der mit dem Drückelement (23) verbunden ist, um das Halterelement (1) von seiner Position in der Halteröffnung (0) in dem Erdreich zu platzieren.

6. Vorrichtung nach einem der vorhergehenden Ansprüche, wobei die Vorrichtung (11) mit Führungsmitteln (15, 17) versehen ist, die zum Positionieren der Vorrichtung in einem gewünschten Abstand von dem Spargeldamm konfiguriert sind.

7. Vorrichtung nach einem der vorhergehenden Ansprüche, wobei die Vorrichtung (11) Bewegungsmittel (101) zum Bewegen der Vorrichtung am Spargeldamm entlang aufweist.

8. Vorrichtung nach einem der vorhergehenden Ansprüche, wobei die Platzierungsmittel (20) zum Platzieren des Halterelements in dem Erdreich auf eine solche Weise konfiguriert sind, dass der Folientrageteil (7) des Halterelements (1) sich im Wesentlichen in einer Längsrichtung (P1) des Spargeldamms (202) erstreckt.

9. Verfahren zum Platzieren eines Halterelements (1) unter Verwendung einer Vorrichtung (11) nach einem der Ansprüche 1 bis 8, wobei das Verfahren den Schritt des Bereitstellens eines im Wesentlichen U-förmigen Halterelements (1) umfasst, das Folgendes umfasst:
- einen Folientrageteil (7) zum Tragen eines Folienelements des Minitunnelsystems, sowie
- zwei sich auf beiden Seiten des Folientrageteils (7) erstreckende Befestigungsteile (3), über die das Halterelement (1) in dem Erdreich platziert werden kann,
wobei das Verfahren die folgenden weiteren Schritte umfasst:
- Platzieren des Halterelements (1) in die Halteröffnung (0);
- Platzieren des Halterelements (1) in dem Erdreich unter Verwendung der Platzierungsmittel.

10. Verfahren nach Anspruch 9, das den weiteren Schritt des Vorspannens des oben genannten Halterelements (1) umfasst, wobei die Befestigungsteile (3) in diesem vorgespannten Zustand aufeinander zu bewegt worden sind, wobei sie sich im Wesentlichen parallel zueinander erstrecken.

11. Verfahren nach Anspruch 10, wobei das Verfahren den Schritt des Einbringens des Halterelements (1) in seinem vorgespannten Zustand in die Halteröffnung (0) umfasst.

12. Verfahren nach Anspruch 9, 10 oder 11, das den Schritt des Spannens des Halterelements umfasst, so dass der Folientrageteil im Wesentlichen gekrümmt ist, insbesondere in der Form eines Kreisbogens.

## Revendications

1. Dispositif (11) pour placer un élément de maintien (1) pour un système de mini tunnel au sol sur ou près d'un lit d'asperges (202), dans lequel l'élément de maintien (1) est essentiellement en forme de U, comprenant :
- une partie de support de feuille (7) pour supporter un élément en feuille du système de mini tunnel, ainsi que
- deux parties de fixation (3) s'étendant de part et d'autre de la partie de support de feuille, par l'intermédiaire desquelles l'élément de maintien peut être placé au sol,
dans lequel le dispositif (11) comprend un châssis (12, 13, 16) comprenant :
- des moyens de mise en place (20) munis d'une ouverture de maintien (O) dans laquelle l'élément de maintien (1) peut être placé, **caractérisé en ce que**
les moyens de mise en place (20) sont configurés pour placer l'élément de maintien (1) au sol sur ou près du lit d'asperges (202), où les moyens de mise en place (20) comprennent un élément de poussée (23) qui est mobile par rapport au châssis, où l'élément de poussée est configuré pour être en contact avec au moins une partie de la partie de support de feuille (7) de l'élément de maintien (1) lorsque l'élément de maintien (1) est présent dans l'ouverture de support (O).

2. Dispositif selon la revendication 1, dans lequel les parties de fixation (3) de l'élément de maintien (1) s'étendent selon un angle différent de zéro l'une par rapport à l'autre, et dans lequel le dispositif (11) est doté de moyens de sollicitation (14 , 15) qui sont configurés pour au moins maintenir l'élément de maintien (1) dans une position sollicitée une fois qu'il est présent dans l'ouverture de maintien, dans cette position sollicitée, les parties de fixation (3) ont été déplacées l'une vers l'autre, s'étendant essentiellement parallèlement l'une à l'autre.

3. Dispositif selon la revendication 2, dans lequel les moyens de sollicitation (14, 15) sont conçus pour réaliser ou maintenir la sollicitation sur l'élément de maintien (1) de sorte que la partie de support de feuille (7) ait une configuration essentiellement incurvée, en particulier en arc circulaire.

4. Dispositif selon l'une quelconque des revendications précédentes, dans lequel les moyens de mise en place (20) sont dotés d'un mécanisme à levier (20) pour placer l'élément de maintien au sol.

5. Dispositif selon la revendication 4, dans lequel le mécanisme à levier (20) comprend un levier (21) qui est monté par un pivot (22) sur le châssis et qui est relié à l'élément de poussée (23) pour placer l'élément de maintien (1) au sol à partir de sa position dans l'ouverture de maintien (O).

6. Dispositif selon l'une quelconque des revendications précédentes, dans lequel le dispositif (11) est doté de moyens de guidage (15, 17) configurés pour positionner le dispositif à une distance désirée du lit d'asperges.

7. Dispositif selon l'une quelconque des revendications précédentes, dans lequel le dispositif (11) comprend des moyens de déplacement (101) pour déplacer le dispositif le long du lit d'asperges.

8. Dispositif selon l'une quelconque des revendications précédentes, dans lequel les moyens de mise en place (20) sont configurés pour placer l'élément de maintien au sol de manière à ce que la partie de support de feuille (7) de l'élément de maintien (1) s'étende essentiellement dans une direction longitudinale (P1) du lit d'asperges (202).

9. Procédé pour placer un élément de maintien (1) en utilisant un dispositif (11) selon l'une quelconque des revendications 1 à 8, dans lequel le procédé comprend l'étape consistant à fournir un élément de maintien (1) essentiellement en forme de U comprenant :
- une partie de support de feuille (7) pour supporter un élément en feuille du système de mini tunnel, ainsi que
- deux parties de fixation (3) s'étendant de part et d'autre de la partie de support de feuille (7), par l'intermédiaire desquelles l'élément de maintien (1) peut être placé au sol,
dans lequel le procédé comprend les étapes supplémentaires consistant :
- à placer l'élément de maintien (1) dans l'ouverture de maintien (O) ;
- à placer l'élément de maintien au sol en utilisant les moyens de mise en place.

10. Procédé selon la revendication 9, comprenant l'étape supplémentaire consistant à solliciter l'élément de maintien précité (1), dans cet état sollicité les parties de fixation (3) ont été déplacées l'une vers l'autre, s'étendant essentiellement parallèlement l'une à l'autre.

11. Procédé selon la revendication 10, dans lequel le procédé comprend l'étape consistant à placer l'élément de maintien (1) dans l'ouverture de maintien (O) dans son état sollicité.

12. Procédé selon la revendication 9, 10 ou 11, comprend l'étape de tension de l'élément de maintien de sorte que la partie de support de feuille soit essentiellement incurvée, en particulier sous la forme d'un arc de cercle.
